# EUROPÄISCHE PATENTSCHRIFT

(11) **EP 2 085 533 B1**
(45) Veröffentlichungstag und Bekanntmachung des Hinweises auf die Patenterteilung: **30.03.2016**
(21) Anmeldenummer: 09150457.1
(22) Anmeldetag: 13.01.2009
(51) Int. Cl.: A47B 96/06, E04F 11/025, E04F 11/108

(54) **Verbindungsvorrichtung zur Verbindung von Stufe und Wange einer Treppe- bzw. Möbelteilen**
Connection device for connecting step and side wall on a staircase or furniture parts
Dispositif de liaison destiné à la liaison du degré et du limon d'un escalier ou d'éléments de meubles

(30) Priorität: 31.01.2008 DE 102008006885
(43) Veröffentlichungstag der Anmeldung: 05.08.2009
(73) Patentinhaber: Seidl, Walter, 86707 Westendorf (DE)
(72) Erfinder: Seidl, Walter, 86707 Westendorf (DE)
(74) Vertreter: Charrier, Rapp & Liebau

(56) Entgegenhaltungen:
- DE-A1- 3 120 735
- DE-A1- 19 731 646
- DE-A1- 19 933 941
- DE-U1- 9 319 498
- US-A- 5 026 013
- US-A- 6 089 247
- US-B1- 6 353 969

## Beschreibung

Die Erfindung betrifft eine Verbindungsvorrichtung zur Verbindung von Stufe und Wange einer Treppe nach dem Oberbegriff des Anspruchs 1 bzw. zur Verbindung eines ersten Teils mit einem zweiten Teil eines Möbelbauteils nach dem Oberbegriff des Anspruchs 12.

Eine gattungsgemäße Verbindungsvorrichtung zur Verbindung einer Stufe mit einer Wange einer Treppe in Form von Gewindebuchsen offenbart die DE 197 12 175 A1. Die dortigen Gewindebuchsen dienen zum nicht sichtbaren, fugenfreien Verbinden von Treppenteilen, wobei eine Gewindebuchse in der Treppenwange und eine Gewindebuchse in der Treppenstufe mittels Holzschrauben befestigt sind. In der Treppenstufe ist eine Gewindebuchse drehbar auf einer Sechskantschraube gelagert, die selbst fest in die Stufe eingeschraubt ist. Die andere Gewindebuchse ist fest in der Treppenwange versenkt und verschraubt. Durch stumpfes Aufsetzen der Stufe auf die Wange mit gleichzeitigem Drehen der Gewindebuchse, die sich in der Stufe befindet, verbinden sich beide Gewindebuchsen und die Treppenteile kraftschlüssig mit hoher Belastbarkeit. Um die drehbare Gewindebuchse in der Trittstufe mittels eines Zylinderstifts drehen zu können, befindet sich auf der Unterseite der Treppenstufe im Bereich der Gewindebuchse ein Montageschlitz. Dieser wird nach der Montage mittels einer Abdeckkappe geschlossen. Die dortige Verbindungsvorrichtung weist den Nachteil auf, dass die Stabilität der Treppenstufe im Bereich der besonders belasteten Befestigungsbuchsen durch den Montageschlitz geschwächt ist. Zudem ist der Montageschlitz selbst bei Abdeckung mit einer Abdeckkappe ästhetisch unerwünscht, da bei Holztreppen in der Regel auch die Unterseiten der Treppenstufen zu sehen sind. Darüber hinaus ist die Montage der Treppenstufe und der Treppenwange schwierig, da die drehbare Gewindebuchse in die feststehende Gewindebuchse eingeschraubt werden muss, während gleichzeitig die Treppenstufe möglichst ruhig und senkrecht zu Treppenwange gehalten werden muss, da sonst die drehbare Gewindebuchse in der feststehenden Gewindebuchse verkantet oder verklemmt. Zudem ist aufgrund der unterseitigen Anordnung des Montageschlitzes der Montage- oder Zylinderstift schlecht in die drehbare Gewindebuchse einzufädeln und kann beim Montieren leicht herausfallen.

Eine Verbindungsvorrichtung für rechtwinklig zueinander angeordnete plattenförmige Werkstücke offenbart die DE 93 19 498 U1. Dort ist ein tragendes Auflageteil einseitig zylinderförmig und einseitig als halbseitiger Zylinder ausgebildet, so dass sich eine rechteckige Auflagefläche ergibt, in der eine Tasche mit einer Durchgangsbohrung mit Senkung eingearbeitet ist. Das Auflageteil wird fest mit der Treppenwange verbunden. In die Treppenstufe wird von unten ein Einbausackloch eingebohrt, in die ein Zentrierbolzen aus Metall eingesetzt wird. Zum Verbinden von Treppenstufe mit Treppenwange wird die Treppenstufe dem Zentrierbolzen auf die Auflagefläche des Auflageteils aufgelegt und mittels einer Holzschraube fest mit diesem verbunden.

Die DE 31 20 735 A1 betrifft eine Stockwerkstreppe aus Trittplatten, die seitlich an lotrechten, sich zwischen den Gebäudedecken erstreckenden Profilschienen befestigt sind. Dazu wird eine Anklemmschraube mit ihrem Kopf in die Profilschiene und mit der Mutter festgeschraubt, so dass der Gewindebolzen waagerecht von der Profilschiene absteht. Daran wird der waagerechte Schenkel einer Stütze aufgeschraubt, deren lotrechter Schenkel mittels einer Befestigungsschraube von unten an die Trittplatte angeschraubt ist. Zur Befestigung des rechten Endes der Trittplatte an der Wand wird die gleiche winkelförmige Stütze verwendet, welche einen Gewindebolzen mit dem gleichen Durchmessers wie der Gewindebolzen aufweist. Des schöneren Aussehens wegen sind die Schraubelemente der waagerechten Schenkel durch Kunststoff-Zierkappen und abgedeckt. Die rechte Kappe hält sich nur durch Reibung am Außenumfang des waagerechten Schenkels. Hierbei liegen die Kappen frei und können gegenüber den Schraubelementen der waagrechten Schenkel auch kippen, so dass die Kappen beim Einbau der Treppe im Weg sind. Zudem können die Kappen auch über die Schraubelemente der waagrechten Schenkel gezogen werden, so dass die Kappen beim Transport verloren gehen können.

DE 3 120 735 A1 offenbart die Merkmale des Oberbegriffs des Anspruchs 1.

Die US 5 026 013 A betrifft eine Wandhalterung für eine Handtuchstange mit einem Tragelement, dass ein Halteelement aufnimmt. Dabei können beide Teile durch eine auf das Haltelement aufschiebbare Abdeckkappe abgedeckt werden können. Dabei liegt das Abdeckelement frei und kann gegenüber dem Halteelement verkippen, so dass das Abdeckelement bei der Montage der Wandhalterung im Weg ist. Zudem kann das Abdeckelement auch über das Halteelement abgezogen werden, so dass das Abdeckelement beim Transport verloren gehen kann.

Eine weitere Verbindungsvorrichtung offenbart die DE 4 445 295 C2, welche aus einem an der Treppenwange befestigbaren Tragelement und einem auf diesem lösbar festlegbaren Treppenstufenhalteelement besteht, wobei das Tragelement einen in die Treppenwange einsetzbaren zylindrischen Wangenbefestigungsabschnitt und einen über die Treppenwange vorstehenden, sich in Längsrichtung des Wangenbefestigungsabschnitts erstreckenden Auflageabschnitt mit einer ebenen Auflagefläche und einer vertikalen Durchgangsbohrung aufweist, die mit einer vertikalen Durchgangsbohrung des Stufenhalteelements in Deckung bringbar ist. Hierbei ist das Treppenstufenhalteelement als zylindrischer Zentrierbolzen ausgebildet, der in montiertem Zustand in eine bodenseitige Bohrung der Treppenstufe eingesetzt ist und einen über die unteren Treppenstufeoberfläche hinausragenden Führungsbund aufweist, wobei in der ebenen Auflagefläche des Trageelements im Bereich der vertikalen Durchgangsbohrung eine Kreistasche oder Langlochtasche vorgesehen ist, in die der Führungsbund formschlüssig einsetzbar ist. Nachteilig bei dieser Verbindungsvorrichtung ist die umständliche Montage und ihr unschönes Aussehen. Denn die Befestigungsschrauben für die Treppenstufen müssen bei bereits eingesetzter Verbindungsvorrichtung von unten in die Treppenstufe geschraubt werden. Hierdurch wird auch der Austausch einer Treppenstufe, beispielsweise einer zerstörten oder verzogenen Treppenstufe, erschwert, da die Unterseite der Treppenstufe schwer zugänglich ist. Zudem können gerade bei den von unten sichtbaren Treppenstufen der Holztreppe stets die Trageelemente erkannt werden, was ästhetisch störend ist.

Die DE 20 2006 017 856 U1 betrifft eine Ganzglastreppe, welche ein Tragelement in Form von Haltekonsolen und ein an der Glasstufe angeordnetes Tragelement in Form von Halteplatten aufweist, welche fest miteinander verbindbar sind. Das dortige Halteelement greift in eine Ausnehmung im Tragelement ein, so dass der Tragbereich und der Auflagebereich zwischen Stufe und Wange nicht freiliegen. Ein verschiebbar am Halteelement angeordnetes Abdeckelement, welches die freiliegenden Trag- und Auflagebereiche abdecken kann, ist dort nicht offenbart.

Die DE 1 977 564 U betrifft ein Verbindungsteil, mit dem beispielsweise Treppen an Treppenwangen befestigt werden können. Das dortige Verbindungsteil besteht aus einem Hauptteil aus einer dicken schweren Stahlplatte mit einem Kanal. Das Verbindungsteil wird direkt an der Treppenwange befestigt. In den Kanal des Verbindungsteils kann von vorne die Treppenstufe eingeschoben werden. Hierzu ist das stirnseitige Ende der Treppenstufe als Schwalbenschwanz ausgebildet, welcher mit den einwärts gebogenen Rändern des Kanals des Verbindungsteils korrespondiert. Ein Abdeckelement ist dort lediglich auf der Treppenstufe verschiebbar. Bei der dortigen Anordnung müssen die Treppenstufen exakt auf den Abstand der Treppenwangen angepasst werden, da dort keine getrennte Verbindungsvorrichtung vorgesehen ist, mit der die Unterschiede ausgeglichen werden könnten. Zudem lässt sich die Treppe nur montieren, wenn die Treppenstufe von vorne eingeschoben werden kann. Gerade wenn senkrechte Setzstufen vorgesehen werden, um z.B. das Durchfallen von Kindern oder Gegenständen zwischen den waagrechten Treppenstufen zu verhindern, kann dort die Treppenstufe nicht ohne weiteres montiert werden. Auch müssen dort die Treppenwangen stets parallel zueinander montiert werden, so dass z.B. keine Wendeltreppen hergestellt werden können. Auch können keine runden oder formverleimten Treppenwangen eingesetzt werden.

Die DE 33 40 976 A1 offenbart ein Verbindungselement in Form einer Steckverbindung, so dass dort stets alle Treppenstufen zunächst in die eine Treppenwange eingesteckt und dann die andere Treppenwange gleichzeitig auf alle Treppenstufen aufgesteckt werden muss. Dies ist sehr umständlich und aufwändig, so dass eine einfache Montage Treppenstufe für Treppenstufe zwischen bereits montierte Treppenwangen gar nicht möglich ist. Zudem müssen dort die Treppenwangen stets parallel zueinander montiert werden, so dass z.B. keine Wendeltreppen hergestellt werden können. Auch können keine runden oder formverleimten Treppenwangen eingesetzt werden.

Die DE 199 50 618 C1 offenbart einen Treppenstufenhalter zur Befestigung einer Treppenstufe an einer Wand, bei dem eine an die Wand anzusetzende Tragkonsole ein Auflager für die Treppenstufe bildet, und ein Wandanker gelenkig mit der Tragkonsole verbunden ist. Dieser Treppenstufenhalter wirkt grob und ästhetisch wenig ansprechend und stellt wegen der offen liegenden Metallteile eine Verletzungsquelle dar.

Der Erfindung liegt deshalb die Aufgabe zugrunde, die oben genannten Nachteile zu überwinden und eine Verbindungsvorrichtung zu schaffen, welche eine einfache Vormontage der Verbindungsvorrichtung in den Treppen- bzw. Möbelteilen und eine schnelle und einfache Montage bzw. Demontage der Treppen- bzw. Möbelteile vor Ort ermöglicht, und gleichzeitig einen ästhetisch hochwertigen Gesamteindruck gewährleistet.

Die Erfindung löst diese Aufgabe durch eine Verbindungsvorrichtung mit den Merkmalen des Anspruchs 1 bzw. des Anspruchs 12. Vorteilhafte Ausgestaltungen und zweckmäßige Weiterbildungen der Erfindung sind in den Unteransprüchen angegeben.

Die Eingangs genannte Verbindungsvorrichtung ist dadurch gekennzeichnet, dass ein Tragbereich des Tragelements und ein mit diesem verbindbarer Haltebereich des Halteelement in eingebautem Zustand der Verbindungsvorrichtung zwischen Stufe und Treppe freiliegen und diese Bereiche durch ein verschiebbar am Halteelement angeordnetes Abdeckelement abdeckbar sind. Dadurch, dass der Tragbereich und der Haltebereich vor der Montage frei liegt, können diese einfach miteinander verbunden werden, wobei anschließend diese Bereiche durch das Abdeckelement abgedeckt werden können. Dies stellt einerseits einen ästhetisch ansprechenden Eindruck bereit, während andererseits die Verbindung nicht aus versehen geöffnet werden kann. Zudem verhindert das Abdeckelement Verletzungen durch offen liegende Verbindungselemente im abgedeckten Bereich. Zudem können hierdurch schnell Treppenstufen ausgetauscht werden, beispielsweise bei einer defekten Treppenstufe oder um Ausbesserungsarbeiten an der Treppenstufe vorzunehmen.

Vorteilhaft ist dabei das Abdeckelement von einer zurückgezogenen Stellung, in der es einen Teil des Halteelements umgreift und den daran anschließenden Auflagebereich frei lässt, in eine herausgezogene Stellung, in der es den Auflagebereich und den Tragbereich umgreift, bewegbar. Der frei liegende Bereich kann auf diese Weise einfach und schnell abgedeckt werden. Hierbei kann vorzugsweise vorgesehen werden, dass im eingebauten Zustand des Halteelements der Teil des Halteelements in eine Ausnehmung an einer Stirnseite der Stufe eingesteckt ist und der daran anschließende Auflagebereich über die Stirnseite der Stufe heraussteht, so dass bei der Montage der Treppe der Auflagebereich leicht zur Herstellung der Verbindung mit dem Tragbereich zugänglich ist.

Fertigungs- und montagetechnisch günstig sieht die Erfindung vor, dass das Halteelement aus einem Vollzylinder gebildet ist und einen ersten Zylinderabschnitt aufweist und der daran anschließende Auflagebereich halbzylindrisch geformt ist. Die Ausnehmung in der Treppenstufe kann dann einfach durch eine Bohrung gebildet sein. Bei dieser Ausführung ist das Abdeckelement vorzugsweise eine rohrförmige Hülse mit an den ersten Zylinderabschnitt angepasstem Innendurchmesser, so dass die Hülse leicht auf dem ersten Zylinderabschnitt verschoben und gedreht werden kann. Eine weitere Weiterbildung dieser Ausführung sieht vor, dass sich an ersten Zylinderabschnitt stufenseitig ein zweiter Zylinderabschnitt größeren Durchmessers anschließt. Die Bohrung in der Stufe wird an diesen Durchmesser angepasst, so dass der zweite Zylinderabschnitt an der Bohrung fest anliegt. Bevorzugt wird der Außendurchmesser der Hülse kleiner als der Durchmesser des zweiten Zylinderabschnitts gewählt, so dass die Hülse in den Bereich zwischen erstem Zylinderabschnitt und Bohrung eingeschoben werden kann. Hierdurch kann einerseits die freie Zugänglichkeit des Auflagebereichs bei der Montage und andererseits die einfache Abdeckung dieses Bereichs im endmontierten Zustand sichergestellt werden.

Um einen guten Sitz der Verbindungsvorrichtung in der Stufe und eine hohe Stabilität der Stufe zu gewährleisten, kann sich in einer weiteren vorteilhaften Ausführung der Erfindung an den zweiten Zylinderabschnitt ein dritter Zylinderabschnitt geringeren Durchmessers anschließen.

Fertigungs- und Montagetechnisch ebenfalls vorteilhaft weisen der Tragbereich eine Tragfläche als Auflage für eine Auflagefläche des Auflagebereichs und das Tragelement einen Zylinderabschnitt auf, an den sich der halbzylindrisch ausgebildete Tragbereich anschließt. In dieser Ausführung können die Hülse und der Zylinderabschnitt des Tragelements vorzugsweise gleichen Außendurchmesser haben, um einen glatten und bündigen Übergang von Abdeckelement zu Tragelement sicherzustellen. Um einen besonders stabilen Übergang und guten Sitz des Abdeckelements bereitzustellen, kann am stufenseitigen Ende des Zylinderabschnitts des Tragelements eine zylindrische Abstufung vorgesehen sein, welche von der Hülse im herausgezogenen Zustand umgriffen wird. Um ein unerwünschtes Abziehen des Abdeckelements zu verhindern, können am Tragelement Sicherungsmittel vorgesehen werden. Diese können in einer vorteilhaften Ausführung der Erfindung aus einem Außengewinde an der Abstufung des Tragelements und einem korrespondierendes Innengewinde am wangenseitigen Ende der Hülse bestehen. In einer alternativen Ausführung können die Sicherungsmittel eine ringförmig umlaufende Erhöhung an der Abstufung und eine korrespondierende Ringnut an der Innenseite am wangenseitigen Ende der Hülse umfassen.

Zum sicheren und festen Verbinden des Tragelements und des Halteelements und somit auch der Stufe mit der Wange, kann eine vorteilhafte Ausführung der Erfindung am Tragbereich und Auflagebereich Verbindungsmittel aufweisen. Diese können in einer montagetechnisch günstigen Ausgestaltung im Tragbereich eine Gewindebohrung und im Auflagebereich eine mit dieser im verbundenen Zustand der Verbindungsvorrichtung fluchtende Verbindungsbohrung mit einem Anschlag für einen Kopf einer Verbindungsschraube umfassen. Die Verbindungsbohrung kann vorteilhaft als Langlochbohrung ausgeführt sein, um bei nicht exakt fluchtenden Gewinde- und Verbindungsbohrung, sei es durch ungenaue Montage oder Verzug, dennoch ein ungehindertes Verschrauben des Halteelements mit dem Tragelement erfolgen kann.

Die erfindungsgemäße Verbindungsvorrichtung ist nicht nur auf die Verwendung bei Treppen, also zur Verbindung Stufen und Wange, geeignet, sondern kann ohne weiteres auch in anderen Bereichen, in denen Bauteile, insbesondere Holzbauteile miteinander verbunden werden müssen, verwendet werden. Ein bevorzugter Verwendungsbereich ist der Möbelbau, insbesondere von Holzmöbeln.

Weiter Besonderheiten und Vorzüge der Erfindung ergeben sich aus der folgenden Beschreibung eines bevorzugten Ausführungsbeispiels anhand der beiliegenden Zeichnungen. Es zeigen:
- **Fig. 1**: eine Schnittdarstellung einer bereits in Wange und Stufe einer Treppe vormontierten erfindungsgemäßen Verbindungsvorrichtung unmittelbar vor der Endmontage;
- **Fig. 2**: eine Schnittdarstellung einer erfindungsgemäßen Verbindungsvorrichtung im endmontierten Zustand (ohne Wange und Stufe);
- **Fig. 3**: eine Draufsicht auf ein Tragelement der Verbindungsvorrichtung aus Fig. 1 von in Fig. 1 rechts (a) und von der Seite (b);
- **Fig. 4**: eine Schnittdarstellung eines alternativen erfindungsgemäßen Tragelement;
- **Fig. 5**: eine Draufsicht auf ein Halteelement der Verbindungsvorrichtung aus Fig. 1 von der Seite (a), von in Fig. 1 links (b) und oben (c);
- **Fig. 6**: eine Draufsicht auf ein alternatives Halteelement entsprechend der Darstellung in Fig. 5 c;
- **Fig. 7**: eine Vorderansicht eines unter Verwendung der Verbindungsvorrichtung montierten Möbelbauteils.

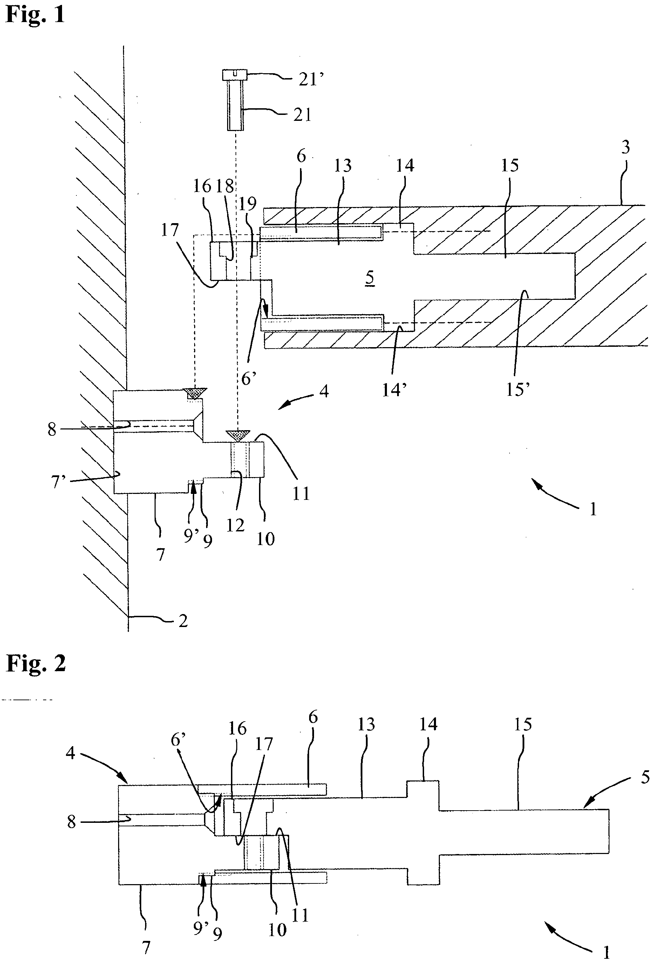

Fig. 1 zeigt die erfindungsgemäße Verbindungsvorrichtung 1 bereits in vormontiertem Zustand in einer Wange 2 und Stufe 3 einer Treppe unmittelbar vor dem Verbinden der Stufe 3 mit der Wange 2, welche beide aus Holz hergestellt sind. Im nachfolgenden werden in Fig. 1 zu der Wange 2 gerichteten Bereiche der einzelnen Teile als "wangenseitig" bezeichnet, während zur Stufe 3 hin gewandte Bereiche als "stufenseitig" bezeichnet werden. Diese Bezeichnungen werden zur einfacheren Erläuterung und nicht in einschränkendem Sinn verwendet, insbesondere ist die erfindungsgemäße Verbindungsvorrichtung 1 nicht auf die Verwendung bei Stufen und Wangen einer Treppe beschränkt. Auch sind die Wange 2 und Stufe 3 nicht Bestandteil der Erfindung. Die Verbindungsvorrichtung 1 wird im wesentlichen gebildet durch ein Tragelement 4, ein Halteelement 5 und ein als Hülse 6 ausgebildetes Abdeckelement.

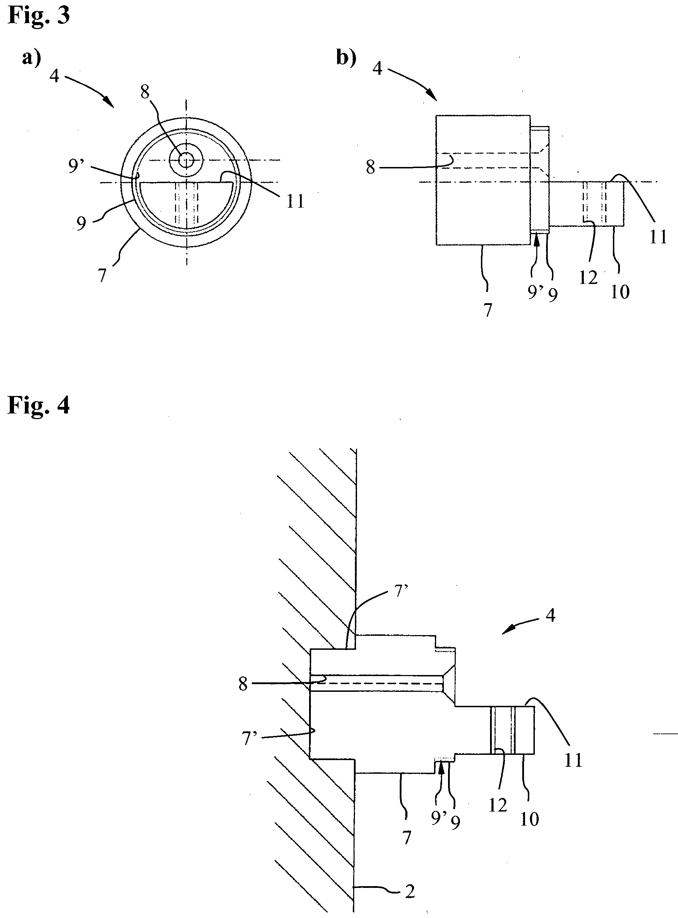

Das in Fig. 3 a) und b) im Detail dargestellte Tragelement 4 ist aus einem Vollzylinder aus Metall gefertigt und weist einen Zylinderabschnitt 7 auf, der zum Teil in eine entsprechende Bohrung 7' in der Treppenwange 2 eingesetzt ist. Das Tragelement 4 ist mittels einer in Fig. 1 nicht dargestellten Holzschraube, welche durch eine Durchgangsbohrung 8 im Tragelement 4 reicht, in der Treppenwange 2 verschraubt. Vorteilhaft weist die Durchgangsbohrung 8 auf ihrem stufenseitigen Ende eine Absenkung zur Aufnahme des Senkkopfes der Holzschraube auf. An seinem stufenseitigen Ende weist der Zylinderabschnitt 7 eine Abstufung 9 mit einem Außengewinde 9' auf Weiter schließt sich ein halbzylindrischer Tragbereich 10 an, dessen Durchmesser etwas kleiner ist als der Durchmesser der Abstufung 9. Die flache und in Fig. 1 nach oben weisende Seite des halbzylindrischen Tragbereichs 10 bildet im eingebauten Zustand des Tragelements 4 eine im wesentlichen waagrecht verlaufende Tragfläche 11. Um die Holzschraube ungehindert in die Durchgangsbohrung 8 stecken und in die Treppenwange 2 einschrauben zu können, ist diese oberhalb der Tragfläche 11 angeordnet. In die Tragfläche 11 ist eine senkrecht zu dieser verlaufende Gewindebohrung 12 eingebracht.

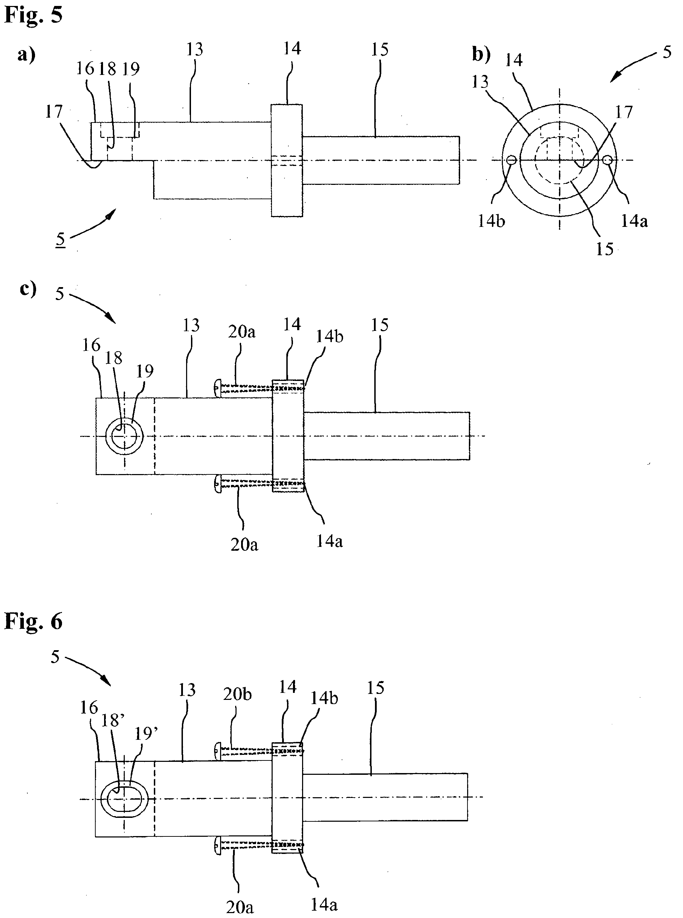

Das Halteelement 5 gemäß Fig. 5 ist wie das Tragelement 4 aus einem Vollzylinder aus Metall gefertigt und weist einen als ersten Zylinderabschnitt 13 ausgebildeten ersten Abschnitt auf. An diesen schließt sich stufenseitig ein zweiter Zylinderabschnitt 14 größeren Durchmessers an, an den sich wiederum ein dritter Zylinderabschnitt 15 kleineren Durchmessers anschließt. Um das Halteelement 5 mit der Stufe 3 zu verbinden, ist in eine Stirnseite 3' der Stufe 3 eine als erste Bohrung 14' ausgebildete Ausnehmung eingebohrt, welche etwa gleichen Durchmesser wie der zweite Zylinderabschnitt 14 aufweist. In die Stirnseite 3' ist koaxial zur ersten Bohrung 14' eine weitere, tiefer in die Stirnseite reichende zweite Bohrung 15' eingebohrt, welche an den Durchmesser des dritten Zylinderabschnitts 15 angepasst ist. Das Halteelement 5 wird in die Bohrung 14' bzw. 15' eingesteckt, bis der zweite Zylinderabschnitt 14 stufenseitig an dem kreisringförmigen Ende der ersten Bohrung 14' anschlägt. Anschließend wird das Halteelement 5 mittels zweier in Fig. 5 c) angedeuteter Holzschrauben 20a bzw. 20b, die in Durchgangsbohrungen 14a bzw. 14b gesteckt werden, in der Stufe 3 verschraubt. Um einen festen Sitz der Holzschrauben 20a bzw. 20b zu gewährleisten, sollte der dritte Zylinderabschnitt 15 einen deutlich kleineren Durchmesser als der zweite Zylinderabschnitt 14 aufweisen.

Wangenseitig schließt sich an den ersten Zylinderabschnitt 13 des Halteelements 5 ein als Halbzylinder ausgebildeter Auflagebereich 16 an, der bei eingesetztem Zustand des Halteelements 5 in die Stufe 3 über deren wangenseitige Stirnseite hervorsteht. Eine flache und in Fig. 1 nach unten weisende Seite des halbzylindrischen Auflagebereichs 16 bildet eine Auflagefläche 17 zur Auflage auf der Tragfläche 11 des Tragelements 4. Senkrecht in die Auflagefläche 17 ist eine als Durchgangsbohrung 18 ausgebildete Verbindungsbohrung eingebohrt, welche auf der der Auflagefläche 17 gegenüberliegenden Seite einen kreisringförmigen Anschlag 19 für den Kopf 21' einer Gewindeschraube 21 aufweist. Die Gewindeschraube 21 ist an das Innengewinde 12 der Tragfläche 11 angepasst, wobei die Durchgangsbohrung 18 größeren Durchmesser als die Gewindebohrung 12 aufweisen sollte, um die Gewindeschraube 21 durchstecken zu können. Der Anschlag 19 kann in bekannter Weise durch eine koaxiale zur Bohrung 18 verlaufende Bohrung mit größerem Durchmesser gebildet werden.

Das in Fig. 6 gezeigte alternative Halteelement 5 unterscheidet sich von dem in Fig. 5 dargestellten ausschließlich dadurch, dass die Verbindungsbohrung als Langlochbohrung 18' in Richtung der Längsachse des Halteelements 5 ausgebildet ist. Die Form des Anschlags 19' ist an die Langlochbohrung 18' angepasst. Hierdurch können durch Materialänderungen, wie es bei Holz durchaus möglich ist, oder durch die Montage bedingte Ungenauigkeiten einfach ausgeglichen werden.

Um die Stufe 3 fest mit der Wange 2 zu verbinden, wird die Auflagefläche 17 des Halteelements 5 so auf die Tragfläche 11 des Tragelements 4 gelegt, dass die Durchgangsbohrung 18 und die Gewindebohrung 12 miteinander fluchten. Anschließend wird die Gewindeschraube 21 durch die Durchgangsbohrung 18 gesteckt und in die Gewindebohrung 12 geschraubt, bis Auflagefläche 17 und Tragfläche 11 fest miteinander kraftschlüssig verbunden sind.

Um eine möglichst gute Verbindung von Tragelement 4 und Halteelement 5 zu gewährleisten, weisen der halbzylindrische Auflagebereich 16 und der halbzylindrische Tragbereich 10 gleichen Durchmesser auf, so dass die Tragfläche 11 und die Auflagefläche 17 im Wesentlichen gleich breit sind. Weiter weist auch der erste Zylinderabschnitt 13 gleichen Durchmesser wie der halbzylindrische Auflagebereich 16 auf, was fertigungstechnisch von Vorteil ist.

Um den in verbundenem Zustand frei liegenden, von außen zugänglichen und sichtbaren Tragbereich 10 und Auflagebereich 16 zu verkleiden (Fig. 2), ist auf dem ersten Zylinderabschnitt 13 des Halteelements 5 die Hülse 6 aus Metall auf dem Zylinderbereich 5 bewegbar, insbesondere in dessen Längsachse verschiebbar, angeordnet.

Vor der Verbindung des Halteelements 5 mit dem Tragelement 4 befindet sich die Hülse 6 in der in Fig. 1 zurückgezogenen Stellung, in welcher sie am ringförmigen Zylinderabschnitt 14 anschlägt. Hierzu weist der erste Zylinderabschnitt 13 einen kleineren Durchmesser als der ringförmige zweite Zylinderabschnitt 14 auf. Der Innendurchmesser der Hülse 6 ist so an den Außendurchmesser des ersten Zylinderabschnitts 13 angepasst, dass die Hülse auf diesem bewegt werden kann, beispielsweise geschoben oder gedreht.

Der Außendurchmesser der Hülse 6 ist an den Außendurchmesser des Zylinderabschnitts 7 des Tragelements 4 angepasst, um in der in Fig. 2 gezeigten Stellung bündig und ohne Kanten an das Tragelement 4 anzuschließen. Hierdurch wird einerseits die Verletzungsgefahr minimiert und andererseits ein ästhetischer Gesamteindruck hergestellt. Ebenso ist der Durchmesser der ersten Bohrung 14' an den Außendurchmesser des Zylinderabschnitts 7 bzw. den der Hülse 6 angepasst, so das die Hülse 6 frei auf dem ersten Zylinderabschnitt 13 des Halteelements 5 bewegt werden kann. Vorzugsweise wird der Durchmesser des Zylinderabschnitts 7 des Tragelements 4 an die Höhe der Stufe 3 angepasst, um ein Ausbrechen des Halteelements 5 aus der Stufe 3 bei zu großem Außendurchmesser zu vermeiden.

Um zu verhindern, dass die Hülse 6 aus Versehen von der in Fig. 2 gezeigten herausgezogenen Stellung vom Tragelement 4 entfernt werden kann, ist am wangenseitigen Ende der Hülse 6 ein Innengewinde 6' vorgesehen, welches zu dem Außengewinde 9' der Abstufung 9 korrespondiert. Die frei auf dem ersten Zylinderabschnitt 13 und dem halbzylindrischen Auflagebereich 16 drehbare Hülse 6 kann somit bei der Montage einfach, schnell und ohne zusätzliches Werkzeug am Tragelement 4 gesichert werden. Umgekehrt kann gegebenenfalls der aus Tragbereich 10 und Auflagebereich 16 gebildete Verbindungsbereich einfach zur Demontage der Stufe 3 geöffnet werden, ohne dass das Äußere der Hülse 6 mit Werkzeugen geöffnet oder zerstört werden müsste.

Anstelle der in den Zeichnungen dargestellten Gewindeverbindung zwischen Hülse 6 und Tragelement 4 können auch andere zum schnellen und sicheren Verbinden und Öffnen geeignete Verbindungen verwendet werden, beispielsweise eine Schnappverbindung mittels einer an der Abstufung ringförmig umlaufenden Erhöhung und einer korrespondierenden Ringnut an der Innenseite des wangenseitigen Endes der Hülse 6 oder umgekehrt.

Ein bevorzugtes Einsatzgebiet der erfindungsgemäßen Verbindungsvorrichtung ist die Verwendung bei Treppen, da die Bohrungen 14' und 15' bereits bei der Vormontage der Treppenstufen in die Stirnseite der Treppenstufen 3 gebohrt und das Halteelement 5 und die Hülse 6 eingesteckt werden können. Am Montageort muss dann lediglich das Tragelement 4 an der Treppenwange 2 befestigt werden. Werden auch die Treppenwangen 2 vormontiert, so muss vor Ort lediglich noch das Halteelement 5 mit dem Tragelement 4 verschraubt und anschließend die Hülse 6 mit dem Tragelement 4 verschraubt werden.

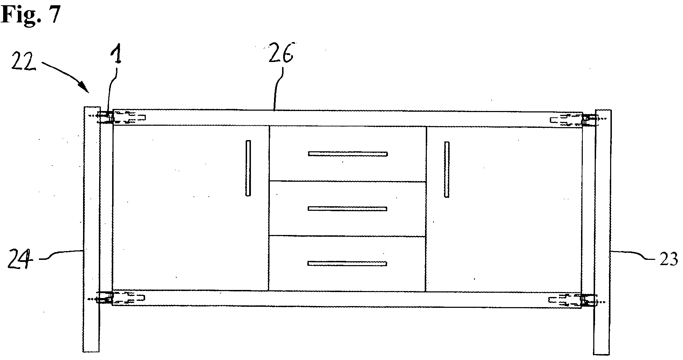

Eine alternative, aber ebenso vorteilhafte Verwendung der Verbindungsvorrichtung 1 bei einem Möbelbauteil 22 ist in Fig. 7 dargestellt. Dort werden Seitenteile 23 und 24 mittels erfindungsgemäßer Verbindungsvorrichtungen 1 mit einem Schrankteil 26 verbunden. Hierbei entsprechen die Seitenteile 23 bzw. 24 jeweils der in Fig. 1 gezeigten Treppenwange 2, so dass daran die Tragelemente 4 der Verbindungsvorrichtungen 1 angebracht werden. Das Schrankteil 26 entspricht der in Fig. 1 gezeigten Treppenstufe 3, so dass daran die Halteelemente 5 mit Hülse 6 der Verbindungsvorrichtungen 1 angebracht werden müssen.

## Patentansprüche

1. Verbindungsvorrichtung (1) zur Verbindung von Stufe (3) und Wange (2) einer Treppe, mit einem Tragelement (4) zum Anbringen an der Wange (2) und einem Halteelement (5) zum Anbringen an der Stufe (3), wobei das Tragelement (4) und das Halteelement (5) zur Verbindung der Stufe (3) mit der Wange (2) fest miteinander verbindbar sind, wobei ein Tragbereich (10) des Tragelements (4) und ein mit diesem verbindbarer Auflagebereich (16) des Halteelements (5) in eingebautem Zustand der Verbindungsvorrichtung (1) zwischen Stufe (3) und Wange (2) frei liegen und durch ein verschiebbar am Halteelement (5) angeordnetes Abdeckelement (6) abdeckbar sind, und wobei das Abdeckelement (6) von einer zurückgezogenen Stellung (Fig. 1), in der es einen Teil (13, 14, 15) des Halteelements (5) umgreift und den daran anschließenden Auflagebereich (16) frei lässt, in eine herausgezogene Stellung (Fig. 2) bewegbar ist, in der es den Auflagebereich (16) und den Tragbereich (10) umgreift, **dadurch gekennzeichnet, dass** das Halteelement (5) einen ersten Zylinderabschnitt (13) aufweist und der daran anschließende Auflagebereich (16) halbzylindrisch geformt ist, und der Tragbereich (10) eine Tragfläche (11) als Auflage für eine Auflagefläche (17) des Auflagebereichs (16) aufweist und das Tragelement (4) einen Zylinderabschnitt (7) aufweist und sich daran der halbzylindrisch ausgebildete Tragbereich (10) anschließt.

2. Verbindungsvorrichtung (1) nach Anspruch 1, **dadurch gekennzeichnet, dass** zur Sicherung des Abdeckelements (6) am Tragelement (4) Sicherungsmittel (9, 6') vorgesehen sind.

3. Verbindungsvorrichtung (1) nach Anspruch 1 oder 2, **dadurch gekennzeichnet, dass** im eingebauten Zustand des Halteelements (5) der Teil (13, 14, 15) des Halteelements (5) in eine Ausnehmung (14') an einer Stirnseite (3') der Stufe (3) eingesteckt ist und der daran anschließende Auflagebereich (16) über die Stirnseite (3') der Stufe (3) heraussteht.

4. Verbindungsvorrichtung (1) nach einem der Ansprüche 1 bis 3, **dadurch gekennzeichnet, dass** das Abdeckelement eine rohrförmige Hülse (6) mit an den ersten Zylinderabschnitt (13) angepasstem Innendurchmesser ist.

5. Verbindungsvorrichtung (1) nach Anspruch 4, **dadurch gekennzeichnet, dass** sich an den ersten Zylinderabschnitt (13) stufenseitig ein zweiter Zylinderabschnitt (14) größeren Durchmessers anschließt.

6. Verbindungsvorrichtung (1) nach Anspruch 5, **dadurch gekennzeichnet, dass** der Außendurchmesser der Hülse (6) kleiner als der Durchmesser des zweiten Zylinderabschnitts (14) ist.

7. Verbindungsvorrichtung (1) nach Anspruch 5 oder 6, **dadurch gekennzeichnet, dass** sich an den zweiten Zylinderabschnitt (14) ein dritter Zylinderabschnitt (15) geringeren Durchmessers anschließt.

8. Verbindungsvorrichtung (1) nach einem der Ansprüche 4 bis 7, **dadurch gekennzeichnet, dass** die Hülse (6) und der Zylinderabschnitt (7) des Tragelements (4) gleichen Außendurchmesser haben und/oder am stufenseitigen Ende des Zylinderabschnitts (7) des Tragelements (4) eine zylindrische Abstufung (9) vorgesehen ist, welche von der Hülse (6) im herausgezogenen Zustand umgriffen wird.

9. Verbindungsvorrichtung (1) nach Anspruch 8, **dadurch gekennzeichnet, dass** die Sicherungsmittel ein Außengewinde (9') an der Abstufung (9) und ein korrespondierendes Innengewinde (6') am wangenseitigen Ende der Hülse (6) umfassen oder dass die Sicherungsmittel eine ringförmig umlaufende Erhöhung an der Abstufung (9) und eine korrespondierende Ringnut an der Innenseite am wangenseitigen Ende der Hülse (6) umfassen.

10. Verbindungsvorrichtung (1) nach einem der voranstehenden Ansprüche, **dadurch gekennzeichnet, dass** am Tragbereich (10) und Auflagebereich (16) Verbindungsmittel (12, 18, 19, 21) zum sicheren Verbinden des Tragelements (4) mit dem Halteelement (5) vorgesehen sind.

11. Verbindungsvorrichtung (1) nach Anspruch 10, **dadurch gekennzeichnet, dass** die Verbindungsmittel im Tragbereich (10) eine Gewindebohrung (12) und im Auflagebereich (16) eine mit dieser im verbundenen Zustand der Verbindungsvorrichtung (1) fluchtende Verbindungsbohrung (18) mit einem Anschlag (19) für einen Kopf (21') einer Verbindungsschraube (21) umfassen.

12. Verbindungsvorrichtung (1) zur Verbindung eines ersten Teils (23, 24) mit einem zweiten Teil (26) eines Möbelbauteils (22), mit einem Tragelement (4) zum Anbringen an dem ersten Teil (23, 24) und einem Halteelement (5) zum Anbringen an dem zweiten Teil (26), wobei das Tragelement (4) und das Halteelement (5) zur Verbindung des zweiten Teils (26) mit dem ersten Teil (23, 24) fest miteinander verbindbar sind, wobei ein Tragbereich (10) des Tragelements (4) und ein mit diesem verbindbarer Auflagebereich (16) des Halteelements (5) in eingebautem Zustand der Verbindungsvorrichtung (1) zwischen zweiten Teil (26) und ersten Teil (23, 24) frei liegen und durch ein verschiebbar am Halteelement (5) angeordnetes Abdeckelement (6) abdeckbar sind, und wobei das Abdeckelement (6) von einer zurückgezogenen Stellung (Fig. 1), in der es einen Teil (13, 14, 15) des Halteelements (5) umgreift und den daran anschließenden Auflagebereich (16) frei lässt, in eine herausgezogene Stellung (Fig. 2) bewegbar ist, in der es den Auflagebereich (16) und den Tragbereich (10) umgreift, **dadurch gekennzeichnet, dass** das Halteelement (5) einen ersten Zylinderabschnitt (13) aufweist und der daran anschließende Auflagebereich (16) halbzylindrisch geformt ist, und der Tragbereich (10) eine Tragfläche (11) als Auflage für eine Auflagefläche (17) des Auflagebereichs (16) aufweist und das Tragelement (4) einen Zylinderabschnitt (7) aufweist und sich daran der halbzylindrisch ausgebildete Tragbereich (10) anschließt.

## Claims

1. Connection device (1) for connecting step (3) and side wall (2) of a staircase, having a support element (4) for attaching to the side wall (2) and a retaining element (5) for attaching to the step (3), wherein the support element (4) and the retaining element (5) for connecting the step (3) to the side wall (2) can be connected firmly to one another, wherein a support region (10) of the support element (4) and a bearing region (16), which can be connected to the latter, of the retaining element (5) lie freely between step (3) and side wall (2) in the installed state of the connection device (1) and can be covered by a cover element (6) arranged to be displaceable on the retaining element (5), and wherein the cover element (6) can be moved from a retractedposition (Figure 1), in which it surrounds a part (13, 14, 15) of the retaining element (5) and leaves free the bearing region (16) connected thereto, to a pulled-outposition (Figure 2), in which it surrounds the bearing region (16) and the support region (10), **characterised in that** the retaining element (5) has a first cylindrical section (13) and the bearing region (16) connected thereto is shaped to be semi-cylindrical, and the support region (10) has a support surface (11) as a rest for a bearing surface (17) of the bearing region (16) and the support element (4) has a cylindrical section (7) and the support region (10) designed to be semi-cylindrical is connected thereto.

2. Connection device (1) according to claim 1, **characterised in that** securing means (9, 6') are provided to secure the cover element (6) on the support element (4).

3. Connection device (1) according to claim 1 or 2, **characterised in that** in the installed state of the retaining element (5), the part (13, 14, 15) of the retaining element (5) is inserted in a recess (14') on an end-face side (3') of the step (3) and the bearing region (16) connected thereto projects beyond the end-face side (3') of the step (3).

4. Connection device (1) according to one of claims 1 to 3, **characterised in that** the cover element is a tubular sleeve (6) with internal diameter adapted to the first cylindrical section (13).

5. Connection device (1) according to claim 4, **characterised in that** a second cylindrical section (14) of greater diameter is connected to the first cylindrical section (13) on the step side.

6. Connection device (1) according to claim 5, **characterised in that** the external diameter of the sleeve (6) is less than the diameter of the second cylindrical section (14).

7. Connection device (1) according to claim 5 or 6, **characterised in that** a third cylindrical section (15) of smaller diameter is connected to the second cylindrical section (14).

8. Connection device (1) according to one of claims 4 to 7, **characterised in that** the sleeve (6) and the cylindrical section (7) of the support element (4) have the same external diameter and/or a cylindrical gradation (9), which is surrounded by the sleeve (6) in the pulled-out state, is provided on the step-side end of the cylindrical section (7) of the support element (4).

9. Connection device (1) according to claim 8, **characterised in that** the securing means comprise an external thread (9') on the gradation (9) and a corresponding internal thread (6') on the side wall-side end of the sleeve (6) or **in that** the securing means comprise an annularly running elevation on the gradation (9) and a corresponding annular groove on the inner side on the side wall-side end of the sleeve (6).

10. Connection device (1) according to one of the preceding claims, **characterised in that** connection means (12, 18, 19, 21) for secure connection of the support element (4) with the retaining element (5) are provided on the support region (10) and bearing region (16).

11. Connection device (1) according to claim 10, characterisedin that the connection means in the support region (10) comprise a threaded bore (12) and in the bearing region (16) a connection bore (18) aligned with the latter in the connected state of the connection device (1) with a stop (19) for a head (21') of a connection screw (21).

12. Connection device (1) for connecting a first part (23, 24) to a second part (26) of a furniture component (22), having a support element (4) for attaching to the first part (23, 24) and a retaining element (5) for attaching to the second part (26), wherein the support element (4) and the retaining element (5) for connecting the second part (26) to the first part (23, 24) can be connected firmly to one another, wherein a support region (10) of the support element (4) and a bearing region (16), which can be connected to the latter, of the retaining element (5) lie freely between second part (26) and first part (23, 24) in the installed state of the connection device (1) and can be covered by a cover element (6) arranged to be displaceable on the retaining element (5), and wherein the cover element (6) can be moved from a retracted position (Figure 1), in which it surrounds a part (13, 14, 15) of the retaining element (5) and leaves free the bearing region (16) connected thereto, to a pulled-out position (Figure 2), in which it surrounds the bearing region (16) and the support region (10), **characterised in that** the retaining element (5) has a first cylindrical section (13) and the bearing region (16) connected thereto is shaped to be semi-cylindrical, and the support region (10) has a support surface (11) as a rest for a bearing surface (17) of the bearing region (16) and the support element (4) has a cylindrical section (7) and the support region (10) designed to be semi-cylindrical is connected thereto.

## Revendications

1. Dispositif de liaison (1) pour la liaison d'une marche (3) et d'un limon (2) d'un escalier, avec un élément porteur (4) pour le montage sur le limon (2) et un élément de retenue (5) pour le montage sur la marche (3), l'élément porteur (4) et l'élément de retenue (5) pouvant être reliés fixement l'un à l'autre pour la liaison de la marche (3) avec le limon (2), une zone porteuse (10) de l'élément porteur (4) et une zone d'appui (16) pouvant être reliée à celle-ci de l'élément de retenue (5) étant dégagées à l'état monté du dispositif de liaison (1) entre la marche (3) et le limon (2) et pouvant être recouvertes par un élément de recouvrement (6) agencé de manière mobile sur l'élément de retenue (5), et l'élément de recouvrement (6) étant mobile d'une position retirée (figure 1), dans laquelle il entoure une partie (13, 14, 15) de l'élément de retenue (5) et libère la zone d'appui (16) contiguë à celle-ci, à une position extraite (figure 2), dans laquelle il entoure la zone d'appui (16) et la zone porteuse (10), **caractérisé en ce que** l'élément de retenue (5) présente une première section cylindrique (13) et la zone d'appui (16) contiguë à celle-ci est formée de manière semi-cylindrique, et la zone porteuse (10) présente une surface porteuse (11) en tant qu'appui pour une surface d'appui (17) de la zone d'appui (16) et l'élément porteur (4) présente une section cylindrique (7) et la zone porteuse (10) réalisée de manière semi-cylindrique y est contiguë.

2. Dispositif de liaison (1) selon la revendication 1, **caractérisé en ce que** des moyens de blocage (9, 6') sont prévus pour le blocage de l'élément de recouvrement (6) sur l'élément porteur (4).

3. Dispositif de liaison (1) selon la revendication 1 ou 2, **caractérisé en ce qu'**à l'état monté de l'élément de retenue (5), la partie (13, 14, 15) de l'élément de retenue (5) est enfichée dans un évidement (14') sur un côté avant (3') de la marche (3) et la zone d'appui contiguë (16) à celle-ci dépasse du côté avant (3') de la marche (3).

4. Dispositif de liaison (1) selon l'une quelconque des revendications 1 à 3, **caractérisé en ce que** l'élément de recouvrement est un manchon tubulaire (6) avec un diamètre intérieur adapté à la première section cylindrique (13).

5. Dispositif de liaison (1) selon la revendication 4, **caractérisé en ce qu'**une deuxième section cylindrique (14) de plus grand diamètre est contiguë à la première section cylindrique (13) côté marche.

6. Dispositif de liaison (1) selon la revendication 5, **caractérisé en ce que** le diamètre extérieur du manchon (6) est inférieur au diamètre de la deuxième section cylindrique (14).

7. Dispositif de liaison (1) selon la revendication 5 ou 6, **caractérisé en ce qu'**une troisième section cylindrique (15) de plus petit diamètre est contiguë à la deuxième section cylindrique (14) .

8. Dispositif de liaison (1) selon l'une quelconque des revendications 4 à 7, **caractérisé en ce que** le manchon (6) et la section cylindrique (7) de l'élément porteur (4) ont le même diamètre extérieur et/ou un étagement cylindrique (9) est prévu sur l'extrémité côté marche de la section cylindrique (7) de l'élément porteur (4), lequel est entouré par le manchon (6) à l'état extrait.

9. Dispositif de liaison (1) selon la revendication 8, **caractérisé en ce que** les moyens de blocage comportent un filet extérieur (9') sur l'étagement (9) et un filet intérieur (6') correspondant sur l'extrémité côté limon du manchon (6) ou **en ce que** les moyens de blocage comportent une élévation formée sur la périphérie en anneau sur l'étagement (9) et une rainure annulaire correspondante sur le côté intérieur sur l'extrémité côté limon du manchon (6).

10. Dispositif de liaison (1) selon l'une quelconque des revendications précédentes, **caractérisé en ce que** des moyens de liaison (12, 18, 19, 21) sont prévus sur la zone porteuse (10) et la zone d'appui (16) pour la liaison sûre de l'élément porteur (4) avec l'élément de retenue (5).

11. Dispositif de liaison (1) selon la revendication 10, **caractérisé en ce que** les moyens de liaison dans la zone porteuse (10) comportent un perçage fileté (12) et dans la zone d'appui (16) un perçage de liaison (18), s'alignant sur celui-ci à l'état relié du dispositif de liaison (1), avec une butée (19) pour une tête (21') d'une vis de liaison (21).

12. Dispositif de liaison (1) pour la liaison d'une première partie (23, 24) avec une seconde partie (26) d'un élément de meuble (22) avec un élément porteur (4) pour le montage sur la première partie (23, 24) et un élément de retenue (5) pour le montage sur la seconde partie (26), l'élément porteur (4) et l'élément de retenue (5) pouvant être reliés entre eux fixement pour la liaison de la seconde partie (26) avec la première partie (23, 24), une zone porteuse (10) de l'élément porteur (4) et une zone d'appui (16) pouvant être reliée à celle-ci de l'élément de retenue (5) étant dégagées à l'état monté du dispositif de liaison (1) entre la seconde partie (26) et la première partie (23, 24) et pouvant être recouvertes par un élément de recouvrement (6) agencé de manière mobile sur l'élément de retenue (5), et l'élément de recouvrement (6) étant mobile d'une position retirée (figure 1), dans laquelle il entoure une partie (13, 14, 15) de l'élément de retenue (5) et libère la zone d'appui (16) contiguë à celle-ci, à une position extraite (figure 2), dans laquelle il entoure la zone d'appui (16) et la zone porteuse (10), **caractérisé en ce que** l'élément de retenue (5) présente une première section cylindrique (13) et la zone d'appui (16) contiguë à celle-ci est formée de manière semi-cylindrique, et la zone porteuse (10) présente une surface porteuse (11) en tant qu'appui pour une surface d'appui (17) de la zone d'appui (16) et l'élément porteur (4) présente une section cylindrique (7) et la zone porteuse (10) réalisée de manière semi-cylindrique est contiguë à celle-ci.
